# EUROPEAN PATENT SPECIFICATION

(11) **EP 3 938 134 B1**
(45) Date of publication and mention of the grant of the patent: **03.01.2024**
(21) Application number: 20712655.8
(22) Date of filing: 11.03.2020
(51) Int. Cl.: B23K 9/16, B23K 9/173, B23K 9/26, B23K 9/28, B23K 9/32, B23K 9/29

(54) **GAS METAL ARC WELDING TORCH**
SCHUTZGASSCHWEISSPISTOLE
TORCHE DE SOUDAGE

(30) Priority: 12.03.2019 CN 201910184634
(43) Date of publication of application: 19.01.2022
(60) Divisional application: 23208522.5
(73) Proprietor: Jinan Uniarc Welding Technology Limited, Jinan 250102 (CN)
(72) Inventor: PARKER, Tracy, Bewdley, Worcestershire DY14 9RP (GB)
(74) Representative: Noble, Frederick
(86) International application number: PCT/GB2020/050612
(87) International publication number: WO 2020/183177

(56) References cited:
- DE-B- 1 077 806
- US-A- 3 430 837
- US-A- 3 697 721
- US-A1- 2002 113 046
- US-A1- 2007 090 168
- US-A1- 2007 262 060
- US-A1- 2014 319 103
- US-A1- 2017 080 510

## Description

The present invention relates to a gas metal arc welding torch, in particular to a welding torch having features designed to facilitate removal of weld spatter.

### BACKGROUND TO THE INVENTION

Gas Metal Arc Welding (GMAW) is one of the most common welding processes in industrial use today. GMAW welding processes include Metal Inert Gas (MIG) and Metal Active Gas (MAG) welding. In both processes, a gas is supplied to the weld site. The gas is primarily a shielding gas, and in MIG welding the gas is an inert gas, for example argon or carbon dioxide. In MAG welding the gas mixture may contain oxygen or other gasses which interact with the welding process.

US 2017/080510 A1 relates to the securement of contact tips in welding torches of welding systems, where the welding torch system includes a nozzle, a contact tip retainer assembly, and a diffuser assembly.

DE 1077806 B, which forms the basis for the preamble of the independent claim, relates to a torch for carrying out welding work or which can be used for material removal by means of an electric arc. More particularly, it relates to such a device for electrically cutting metals and metal alloys.

US 3430837 A relates to a welding equipment more specifically to an improved welding tip that includes a coating to prevent spattered metal from sticking or building up around the welding tip.

US 3697721 A relates to a removable nozzle for a nose of a gas-shielded arc welding torch, where a surface of pyrolytic graphite within the tip of the nozzle is provided to make it less adherent to weld spatter.

US 2007/090168 A1 relates to an improved welding device that reduces adhesion and accumulation of weld spatter and protects the device against thermal damage.

US 2014/319103 A1 relates to a welding assembly for performing gas shielded arc welding including an adapter, a diffuser and a nozzle.

US 2002/113046 A1 relates to a MIG welding gun including a diffuser with an external thread and a frusto-conical back ramp and a nozzle assembly with an insert with a back ramp and a thread that mates with the diffuser thread.

US 2007/262060 A1 relates to an apparatus and methods for thermally processing a workpiece including directing a plasma arc to the workpiece and using a dielectric shield or dielectric coating to protect a forward portion of a plasma arc torch.

Whether the gas is purely a shield gas (in MIG welding) or whether it has an active component (in MAG welding), it is important that air from the atmosphere is substantially excluded from the weld site.

A removable nozzle, fixed to the end of the welding torch and surrounding the contact tip, is typically used to contain and direct the welding gas so that it flows onto the weld site and provides the correct local atmosphere at the weld site. Ideally the flow through the nozzle and onto the workpiece is substantially lamina flow. Poor sealing around the back of the nozzle (i.e. the closed end of the nozzle) can allow air from the atmosphere to be drawn into the gas stream. This dilutes or contaminates the welding gas and can result in a poor quality or low strength weld.

Faced with a leaking nozzle, welders will often attempt to remediate the system simply by turning up the flow of gas. However, this wastes weld gas, which is expensive.

A further problem encountered in GMAW processes is that small droplets of molten metal and welding debris tend to be scattered or splashed during the welding process. The common term for these droplets is "spatter" or "weld spatter". Spatter can stick to the workpiece, or any surrounding metallic material. However, spatter can become particularly problematic when it builds up on the welding nozzle itself. Spatter enters the nozzle through the open end of the nozzle. A build-up of spatter inside the nozzle can disrupt the flow of gas, creating non-lamina and unpredictable flows causing poor shielding and thus an erratic or poor-quality weld. Spatter can also make removal of the nozzle difficult, since the nozzle in effect becomes welded to metallic parts inside the nozzle, such as the tip adaptor or the torch body.

Currently, the only solution to the problem of spatter accumulation has been to treat surfaces of the welding torch with compounds which are designed to reduce adherence of weld spatter. However, spatter still accumulates and can still be difficult to remove. Typically, a ring of spatter which builds up around the open end of the nozzle can be removed relatively easily with pliers. However, spatter which builds up inside the nozzle can be extremely difficult to remove. Depending on the materials and currents used, spatter removal may need to occur frequently, as often as every ten minutes, resulting in a loss of productivity. Cleaning needs to be carefully undertaken so as not to damage the contact tip and other components. Careful and thorough removal of spatter is time consuming. Some welders try to dislodge spatter by hitting the torch repeatedly against a solid surface. This is not recommended, especially with modern torches which are increasingly complex. Water-cooled torches are especially vulnerable to damage, and all torches can be damaged by rough treatment. Unfortunately, many torches are damaged in an effort to remove welding spatter quickly, without taking the necessary time and care.

It is an object of the present invention to reduce the above mentioned problems.

### STATEMENT OF INVENTION

According to the present invention, there is provided a welding torch according to claim 1.

Preferably, the ring has an internal screw thread and the torch body has an external screw thread.

By fixing a rotatable ring axially with respect to the nozzle, a mechanical advantage is provided when detaching the nozzle from the torch body. As the ring is turned, unscrewing it from the screw thread on the torch body, the nozzle is pushed linearly forwards, away from the torch body. The amount of linear movement due to the unscrewing is small in most embodiments, for example less than 2mm or even less than 1 mm, but is enough to break up spatter which has entered the nozzle and adhered between the nozzle and components inside the nozzle.

The screw thread is preferably a single-start screw thread, preferably a relatively coarse screw thread, to provide maximum mechanical advantage and axial movement for a small number of turns. The full extent of the screw thread in some embodiments may be less than two full turns, for example one turn or about half a turn (i.e. about 180 degrees).

It is noted that the welding tip may be attached to the torch body via a tip adaptor, as is well known in the art. Components within the nozzle may include parts of the torch body itself, the tip adaptor, the contact tip, and various gaskets and seals.

The nozzle may include linear slots spaced around a rear section, each slot running from the rear of the nozzle, along a portion of the nozzle towards the front of the nozzle. The slots allow the nozzle to be expanded or compressed to form a tight fit over a substantially smooth outer surface of a front section of the torch body. This provides a reasonably good seal against ingress of air at the rear of the nozzle.

The slots are preferably machined into the nozzle. The slots may be spaced equidistantly around the circumference of the nozzle. There may be for example six slots.

A sealing ring may be provided between the nozzle and parts of the welding torch which are fixed to the torch body, and which are located inside the nozzle when assembled. The sealing ring is preferably a compressible high-temperature material, for example a plastic. A thermal isolator may be provided in the form of a collar around a part of the torch, for example around the tip adaptor. The thermal isolator may include a flange, and the sealing ring may sit behind the flange of the thermal isolator, when the torch is assembled. The sealing ring may sit in front of the forwardmost extent of the slots in the nozzle, when the nozzle is fully assembled to the torch body.

When the rotatable ring is unscrewed from the torch body, the nozzle may be movable relative to the torch body both by rotation with respect to the torch body and axially with respect to the torch body. It is envisaged that after the small axial movement provided with the assistance of the screw thread, the nozzle may be removed by hand, with a twisting and pulling motion.

The nozzle is typically made from metal, for example copper, preferably nickel-plated copper. A non-metallic insert may be provided on the inside of the nozzle, where the nozzle abuts other metallic parts of the welding torch (for example, a contact tip or tip adaptor). The non-metallic insert may be made from an engineering polymer, for example a thermosetting resin, particularly a phenolic resin. By providing an interface between the nozzle and other parts of the torch body, where that interface is exposed to potential weld spatter coming in to the nozzle from the open front end, which is made up of abutting metallic and non-metallic materials, the weld spatter is far less likely to adhere strongly to both surfaces and make removal of the weld nozzle difficult.

Whether by the use of an insert or otherwise, the exposed interface between the nozzle and the parts of the torch inside the nozzle is preferably provided as a continuously curved surface. Providing a continuously curved surface facing the open end of the nozzle, the curved surface being made up partly of a surface of the nozzle and partly of a surface of a part inside the nozzle (for example, part of a tip adaptor), makes any spatter adhering to the exposed surface on the interface substantially easier to break up, simply by moving the nozzle linearly very slightly. This can be achieved by making use of the mechanical advantage of the thread, to break the continuously curved surface and push the accumulated weld spatter off the parts to which it may have adhered.

The exposed interface forms a spatter collection region - a substantially concave open-ended chamber where spatter accumulates in use.

Another advantage of the nozzle attachment and release system of the invention, together with the design of the interface between the nozzle and the parts of the torch inside the nozzle, is that it provides improved centring of the contact tip within the nozzle compared to prior designs.

The arrangement also ensures that the nozzle is electrically insulated from the current-carrying components of the torch, and to an extent thermally insulated as well. The nozzle will become very hot in use, and thermal insulation prevents that heat from transferring into the torch, including where it is held by an operator.

According to another aspect of the present invention, the nozzle when fitted to the torch body abuts the torch body or a component fixed to the torch body at an interface, and at least a part of the nozzle which forms a part of the interface exposed to the open front of the nozzle, is made from a non-metallic material.

The interface between the nozzle and parts inside the nozzle (which may be, for example, the contact tip or tip adaptor) is vulnerable to build-up of spatter where it is exposed to the open front end of the nozzle. By making the nozzle from a non-metallic material, at the point where it forms the exposed interface abutting the torch body, contact tip or tip adaptor, weld spatter will adhere significantly less strongly at the interface, and can more easily be removed.

The nozzle when fitted to the torch body preferably abuts the tip adaptor, which is a component fixed to the torch body, at the point where the interface is exposed.

The non-metallic material may be an engineering polymer, for example a thermosetting resin, particularly a phenolic resin. The non-metallic material may be only a part of the nozzle, and may be provided as an insert. The insert may be crimped into the nozzle. The bulk of the nozzle may be made from metal, for example copper.

Only a relatively small part of the nozzle needs to be non-metallic, but it is envisaged that at the exposed interface between the nozzle and the parts inside the nozzle, the nozzle is non-metallic at all points where it abuts parts inside the nozzle, which are fixed to the torch body. Parts inside the nozzle include for example the contact tip and the tip adaptor. The nozzle may be metallic at the point where it abuts a nozzle seating region of the torch body, at a back end of the nozzle.

According to another aspect of the invention, the nozzle when fitted to the torch body abuts the torch body or a component fixed to the torch body at an interface, the interface where it is exposed to the open front of the nozzle forming a substantially continuous curved surface.

The substantially continuous curved surface is preferably a concave surface which faces the open end of the torch body. By providing a smooth surface, any weld spatter accumulating at the interface is relatively easy to remove, by axial and/or rotational movement of the nozzle with respect to the torch body.

The concave surface facing the open end of the torch body, in effect forms a cavity formed from two abutting surfaces. The cavity is designed to catch the weld spatter but make it easy to remove. Making the two abutting surfaces from different materials (for example, a metal and a non-metal, like a thermosetting resin, particularly a phenolic resin) is found to be particularly advantageous.

The continuous curved surface at the exposed interface provides a cavity where spatter can build up and accumulate into a solid ring of hard droplets. This can be removed quite easily, in the same way that a solid ring of spatter which commonly builds up around the front of a welding nozzle is currently removed.

The break between the nozzle and the part fixed to the torch body (e.g. the tip adaptor) is preferably substantially central around the concave cavity, i.e. at a rearmost point of the concave cavity.

### BRIEF DESCRIPTION OF THE DRAWINGS

For a better understanding of the present invention, and to show more clearly how it may be carried into effect, reference will now be made by way of example only to the accompanying drawings, in which:
Figure 1 is an exploded view of a welding torch head according to the invention;
Figure 2 is a perspective view of a detachable nozzle, part of the welding torch of Figure 1; and
Figure 3 is a cross-section through the nozzle, when fitted to the welding torch head of Figure 1.

### DESCRIPTION OF PREFERRED EMBODIMENTS

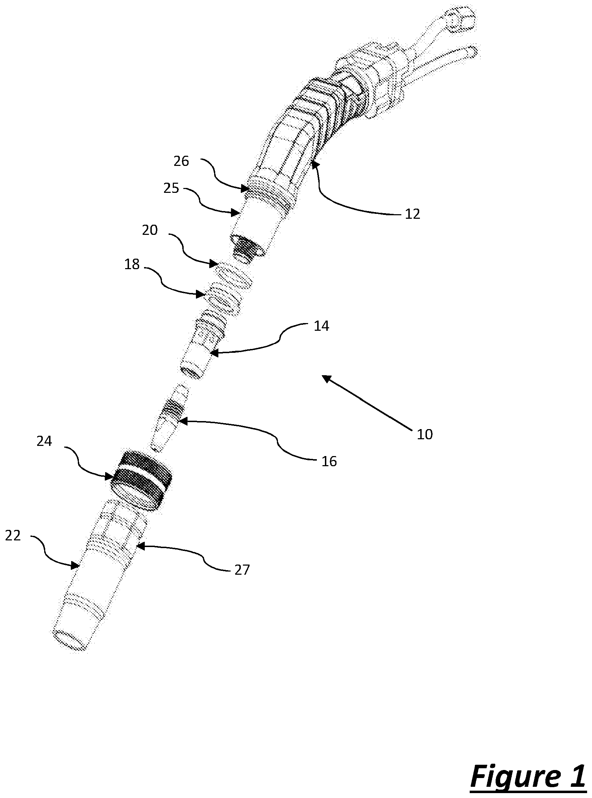

Referring firstly to Figure 1, a welding torch is indicated generally at 10. The welding torch comprises a torch body 12, a tip adaptor 14 and a contact tip 16 which, when the torch is assembled, extends away from the torch body 12 and is connected to the torch body 12 via the tip adaptor 14.

Figure 1 shows a liquid-cooled torch, however the invention is equally applicable to gas-cooled or air-cooled torches.

Note that for the purposes of this specification, the assembly shown in Figure 1 is a "welding torch", sometimes called a "welding torch head". It is appreciated that in use, hoses, cables and a connection block will be required, and these may be supplied as part of a package with a welding torch.

A thermal isolator 18 and sealing ring 20, are provided between the tip adaptor 14 and the torch body 12. These components provide for a sealing surface preventing ingress of air around the back of the nozzle, when the welding torch is assembled.

A nozzle 22 fits over the front end (i.e. the end facing downwards in Figure 1) of the torch body 12. When the torch 10 is assembled, the nozzle 22 substantially surrounds the contact tip 16 and tip adaptor 14, and guides welding gas - which may be inert or active gas - onto the workpiece.

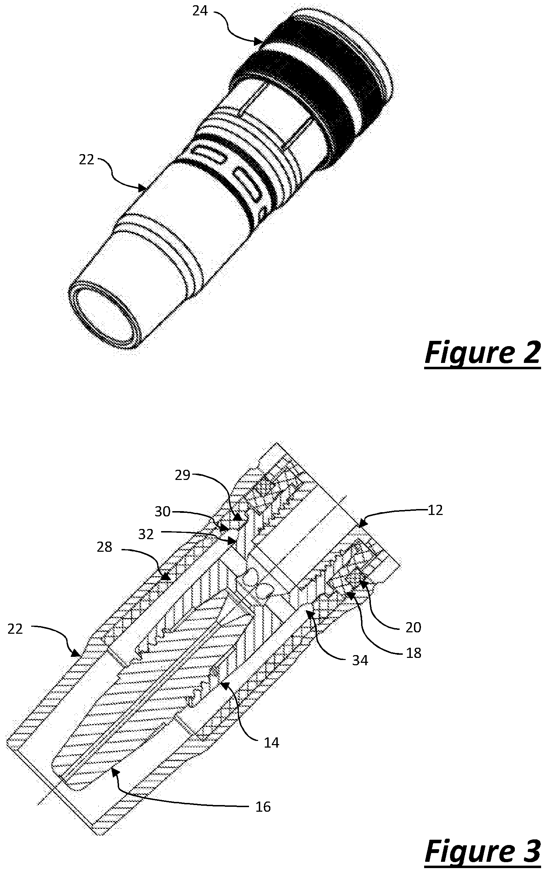

A ring 24 is provided, which is assembled to the back end of the nozzle 22 (see Figure 2). The ring 24 is retained and substantially fixed axially on the nozzle 22, but is free to rotate with respect to the nozzle 22. The ring is internally screw-threaded, and the thread of the ring 24 corresponds with an external screw thread 26 near the front of the torch body 12.

The ring 24 is retained and substantially fixed axially on the nozzle 22 so that screwing or unscrewing the screw thread of the ring 24 from the screw thread 26 of the torch body 12 will cause the whole of the nozzle 22 to move longitudinally / axially with respect to the torch body 12. It will be understood that there may be a small amount of freedom of axial movement of the ring 24 with respect to the nozzle, but this freedom must be a shorter distance than the axial extent of the screw thread 26. For example there may be a freedom of axial movement of the ring 24 with respect to the nozzle of around 0.5mm. The amount of axial movement of the nozzle 22 caused by screwing or unscrewing of the thread may be small, for example less than 2mm or even less than 1mm, but the thread is designed to deliver a large mechanical advantage in causing this axial movement, and even a small extent of movement is found to be enough to break up accumulated spatter and allow easy release of the nozzle 22 from the torch body 12.

The thread 26 is a single start thread to provide maximum mechanical advantage so that the ring 24 may be turned relatively easily to provide a large axial force to help remove the nozzle 22 from the torch body 12. In some embodiments, a multi-start thread may be provided, but a single start thread is preferable for maximum mechanical advantage. A single start thread also allows for good mechanical advantage with a relatively coarse thread. A fine thread would give greater mechanical advantage, but may be more vulnerable to damage and more difficult to use, for example when wearing gloves.

The torch body 12 includes a smooth substantially cylindrical nozzle seating region 25, extending in front of the thread 26. The nozzle 22 includes a corresponding smooth seating region 27, designed to press over the seating region 25 of the nozzle. A number of slots, running down the sides of the nozzle 22 and running parallel to a central axis of the nozzle 22, are provided to facilitate slight radial expansion / compression of the seating region 27 of the nozzle 22. For example, there may be six slots.

Smooth seating regions and slots for pressing a nozzle onto a welding torch are known in the prior art. However, by adding a threaded ring, not only is a mechanical advantage obtained when removing the nozzle, but centring of the nozzle during fitting is made substantially less difficult and more accurate, resulting in better lamina gas flow and a better weld quality.

Figure 3 is a cross-section of the nozzle 22, the contact tip 16, the tip adaptor 14 and part of the torch body 12. The nozzle 22 is made from nickel-plated copper, but includes an insert 28. The insert 28 is made from a phenolic thermosetting resin. The insert 28 takes the form of a sleeve which is permanently fixed inside the nozzle, to form a thickening of the nozzle wall, by crimping. The insert includes an internal flange 29 which extends radially towards the centre of the nozzle, by about 1mm - 2mm, around the entire internal circumference of the nozzle. The internal flange 29 meets the internal wall of the insert 28, where the internal wall runs parallel to a central axis of the nozzle, at a corner 30 which is a radiused curve. A corresponding corner 32 of the tip adaptor 14 is also a smooth radiused curve, where the tip adaptor broadens outwardly to meet the internal flange 29 of the insert 28. The interface between the insert 28 and the tip adaptor 14 forms a spatter collection chamber, as described in further detail below.

The radius of each curve is for example about 1.5mm.

Where the smooth curved corner 30 of the insert 28 meets the smooth curved corner 32 of the tip adaptor, a concave cavity 34 is defined. The concave cavity 34 is at the only part of the interface between the nozzle 22 and the other parts of the torch 10 which is exposed to weld spatter which potentially enters through the open front end of the nozzle 22. The concave cavity 34 forms a spatter collection chamber. Due to the smooth continuous curved surface of the cavity, as well as the dissimilar materials at the interface, one of which is non-metal, the adherence of weld spatter is substantially reduced. Any weld spatter which does accumulate will tend to form a ring around the tip adaptor 14, in the cavity 34. Any adherence will be primarily to the metallic tip adaptor 14 and not to the plastic insert 28. To remove weld spatter, the nozzle ring 24 can be rotated, which with a great mechanical advantage forces the nozzle 22 slightly forward with respect to the torch body 12. When this is done, the corner 30 of the insert 28 will move forwards with respect to the corner 32 of the tip adaptor 14, and will tend to detach the ring of accumulated weld spatter from the tip adaptor 14, to the extent that it has adhered.

After forcing the nozzle 22 slightly forward by using the mechanical advantage of the screw thread, and breaking any adhered weld spatter, the nozzle may be twisted and simultaneously pulled forward, removing the nozzle from the torch body and in doing so removing the vast majority of accumulated weld spatter.

As a result, weld spatter can easily and quickly be removed periodically during a welding job. This increases welder productivity, should result in a higher quality weld, and reduces damage to parts of the welding torch (especially the contact tip and tip adaptor but also the expensive torch body) and thus increases their lifetime and reduces replacement costs.

Figure 3 also shows how the thermal isolator 18 and sealing ring 20 provide for a leak-free seal where the closed back end of the nozzle connects to the torch body 12. The thermal isolator is made from a high temperature resin, for example a phenolic resin. The thermal isolator 18 is in the form of a collar which snaps over the back for the tip adaptor 14, and is retained on the back of the tip adaptor by a circumferential ridge running around the tip adaptor 14. The collar has a flange, providing a forward-facing surface (i.e. facing towards the open end of the nozzle when assembled) and a rear-facing surface (i.e. facing towards the torch body 12 when assembled). The forward-facing surface of the thermal isolator 18 abuts a rear-facing surface of the nozzle insert 28. A sealing ring 20 sits behind the rear-facing surface of the thermal isolator 18. The sealing ring 20 is made from a compressible high-temperature engineering plastic, and has a radius slightly greater than the radius of the flange of the thermal isolator 18.

When assembled. The sealing ring 20 provides a tight seal against the inner wall of the nozzle, forward of the cut-outs of the nozzle. This effectively and completely seals the nozzle, preventing leaks and saving expensive weld gas.

It will be understood that the description of the embodiments is given by way of example only, and the skilled person will envisage various modifications, improvements and alternatives within the scope of the invention. The invention is set out in the claims.

## Claims

1. A welding torch (10) for use in a Gas Metal Arc Welding (GMAW) process, the welding torch (10) having a torch body (12), a welding tip (16) extending from the torch body (12), and a detachable nozzle (22) which substantially surrounds the welding tip (16) in use to direct gas around the welding tip (16) and onto a workpiece, the nozzle (22) having a front end which faces the workpiece in use and a rear end which attaches to the torch body (12) in use, ***characterised in that*** a ring (24) is provided, the ring (24) being substantially axially fixed to the nozzle (22) at the rear end of the nozzle (22), and the ring (24) being rotatable with respect to the nozzle (22), the ring (24) having a screw thread and the torch body (12) having a corresponding screw thread, for fixing the nozzle (22) to the torch body (12).

2. A welding torch (10) as claimed in claim 1, in which the screw threads are single-start screw threads.

3. A welding torch (10) as claimed in claim 1 or claim 2, in which the full extent of the screw thread is around half a full turn.

4. A welding torch (10) as claimed in any of claims 1 to 3, in which linear slots are provided in a rear section of the nozzle (22), the slots running from the rear of the nozzle (22), along a portion of the nozzle (22) towards the front of the nozzle (22).

5. A welding torch (10) as claimed in any of the preceding claims, in which a sealing ring (20) is provided for sealing against an inner surface of the nozzle (22).

6. A welding torch (10) as claimed in claim 5, in which the sealing ring (20) sits behind a flange of a thermal isolator (18), the thermal isolator (18) being assembled around a tip adaptor (14) of the welding torch (10).

7. A welding torch (10) as claimed in any preceding claim, in which the nozzle (22) is substantially made from metal.

8. A welding torch (10) as claimed in claim 7, in which the nozzle (22) is substantially made from copper.

9. A welding torch (10) as claimed in any preceding claim, in which at least a part of the nozzle (22) is made from a non-metallic material, such that a part of the interface between the nozzle (22) and parts inside the nozzle (22) which is exposed to the front end of the nozzle (22), when the welding torch (10) is assembled, comprises in part the non-metallic material.

10. A welding torch (10) as claimed in claim 9 when dependent on claim 7 or claim 8, in which a non-metallic part of the nozzle (22) is provided in the form of a non-metallic insert (28).

11. A welding torch (10) as claimed in claim 9 or claim 10, in which the non-metallic material is a thermosetting resin.

12. A welding torch (10) as claimed in claim 11, in which the thermosetting resin is a phenolic resin.

13. A welding torch (10) as claimed in any of the preceding claims, in which the nozzle (22) when fitted to the torch body (12) abuts the torch body (12) or a component fixed to the torch body (12) at an interface, the interface where it is exposed to the open front end of the nozzle (22) forming a substantially continuous curved surface.

14. A welding torch (10) as claimed in claim 13, in which the curved surface is a concave surface which faces the open end of the torch body (12).

## Patentansprüche

1. Schweißbrenner (10) zur Verwendung in einem Gas-Metall-Lichtbogenschweißverfahren (GMAW-Verfahren), wobei der Schweißbrenner (10) einen Brennerkörper (12), eine Schweißspitze (16), die sich vom Brennerkörper (12) erstreckt, und eine abnehmbare Düse (22) aufweist, die bei Verwendung die Schweißspitze (16) im Wesentlichen umgibt, um Gas um die Schweißspitze (16) herum und auf ein Werkstück zu leiten, wobei die Düse (22) ein vorderes Ende, das bei Verwendung dem Werkstück zugewandt ist, und ein hinteres Ende aufweist, das bei Verwendung am Brennerkörper (12) angebracht ist, **dadurch gekennzeichnet, dass** ein Ring (24) vorgesehen ist, wobei der Ring (24) im Wesentlichen axial an der Düse (22) am hinteren Ende der Düse (22) befestigt ist und der Ring (24) im Bezug auf die Düse (22) drehbar ist, wobei der Ring (24) ein Schraubgewinde aufweist und der Brennerkörper (12) ein entsprechendes Schraubgewinde aufweist, um die Düse (22) am Brennerkörper (12) zu befestigen.

2. Schweißbrenner (10) nach Anspruch 1, wobei die Schraubgewinde eingängige Schraubgewinde sind.

3. Schweißbrenner (10) nach Anspruch 1 oder Anspruch 2, wobei die volle Ausmaß des Schraubgewindes etwa eine halbe volle Umdrehung beträgt.

4. Schweißbrenner (10) nach einem der Ansprüche 1 bis 3, wobei lineare Schlitze in einem hinteren Abschnitt der Düse (22) vorgesehen sind, wobei die Schlitze von der Rückseite der Düse (22) entlang eines Abschnitts der Düse (22) in Richtung der Vorderseite der Düse (22) verlaufen.

5. Schweißbrenner (10) nach einem der vorhergehenden Ansprüche, wobei ein Dichtungsring (20) zum Abdichten gegenüber einer Innenfläche der Düse (22) vorgesehen ist.

6. Schweißbrenner (10) nach Anspruch 5, wobei der Dichtungsring (20) hinter einem Flansch eines Wärmeisolators (18) sitzt, wobei der Wärmeisolator (18) um einen Spitzenadapter (14) des Schweißbrenners (10) herum montiert ist.

7. Schweißbrenner (10) nach einem der vorhergehenden Ansprüche, wobei die Düse (22) im Wesentlichen aus Metall hergestellt ist.

8. Schweißbrenner (10) nach Anspruch 7, wobei die Düse (22) im Wesentlichen aus Kupfer hergestellt ist.

9. Schweißbrenner (10) nach einem der vorhergehenden Ansprüche, wobei mindestens ein Teil der Düse (22) aus einem nichtmetallischen Material hergestellt ist, so dass ein Teil der Schnittstelle zwischen der Düse (22) und Teilen im Inneren der Düse (22), der zum vorderen Ende der Düse (22) freiliegt, wenn der Schweißbrenner (10) montiert ist, teilweise das nichtmetallische Material umfasst.

10. Schweißbrenner (10) nach Anspruch 9 in Abhängigkeit von Anspruch 7 oder Anspruch 8, wobei ein nichtmetallischer Teil der Düse (22) in Form eines nichtmetallischen Einsatzes (28) vorgesehen ist.

11. Schweißbrenner (10) nach Anspruch 9 oder Anspruch 10, wobei das nichtmetallische Material ein wärmehärtbares Harz ist.

12. Schweißbrenner (10) nach Anspruch 11, wobei das wärmehärtbare Harz ein Phenolharz ist.

13. Schweißbrenner (10) nach einem der vorhergehenden Ansprüche, wobei die Düse (22), wenn sie am Brennerkörper (12) angebracht ist, am Brennerkörper (12) oder an einer am Brennerkörper (12) befestigten Komponente an einer Schnittstelle anliegt, wobei die Schnittstelle dort, wo sie zum offenen vorderen Ende der Düse (22) freiliegt, eine im Wesentlichen kontinuierlich gekrümmte Oberfläche bildet.

14. Schweißbrenner (10) nach Anspruch 13, wobei die gekrümmte Oberfläche eine konkave Oberfläche ist, die dem offenen Ende des Brennerkörpers (12) zugewandt ist.

## Revendications

1. Chalumeau soudeur (10) destiné à être utilisé dans un processus de soudage à l'arc sous protection gazeuse (GMAW), le chalumeau soudeur (10) ayant un corps de chalumeau (12), un bec de soudage (16) s'étendant à partir du corps de chalumeau (12), et une buse amovible (22) qui entoure sensiblement le bec de soudage (16) lors de l'utilisation pour diriger un gaz autour du bec de soudage (16) et sur une pièce, la buse (22) ayant une extrémité avant qui fait face à la pièce lors de l'utilisation et une extrémité arrière qui se fixe au corps de chalumeau (12) lors de l'utilisation, **caractérisé en ce qu'il comprend** une bague (24), la bague (24) étant fixée sensiblement axialement à la buse (22) au niveau de l'extrémité arrière de la buse (22), et la bague (24) pouvant tourner par rapport à la buse (22), la bague (24) ayant un filetage et le corps de chalumeau (12) ayant un filetage correspondant, pour fixer la buse (22) au corps de chalumeau (12).

2. Chalumeau soudeur (10) selon la revendication 1, dans lequel les filetages sont des filetages à un seul filet.

3. Chalumeau soudeur (10) selon la revendication 1 ou la revendication 2, dans lequel la longueur totale du filetage est d'environ un demi-tour complet.

4. Chalumeau soudeur (10) selon l'une quelconque des revendications 1 à 3, dans lequel des encoches linéaires sont disposées dans une section arrière de la buse (22), les encoches s'étendant à partir de l'arrière de la buse (22), le long d'une partie de la buse (22) vers l'avant de la buse (22).

5. Chalumeau soudeur (10) selon l'une quelconque des revendications précédentes, dans lequel une bague d'étanchéité (20) est prévue pour assurer une étanchéité contre une surface interne de la buse (22).

6. Chalumeau soudeur (10) selon la revendication 5, dans lequel la bague d'étanchéité (20) se trouve derrière une bride d'un isolant thermique (18), l'isolant thermique (18) étant assemblé autour d'un adaptateur de bec (14) du chalumeau soudeur (10).

7. Chalumeau soudeur (10) selon l'une quelconque des revendications précédentes, dans lequel la buse (22) est sensiblement constituée de métal.

8. Chalumeau soudeur (10) selon la revendication 7, dans lequel la buse (22) est sensiblement constituée de cuivre.

9. Chalumeau soudeur (10) selon l'une quelconque des revendications précédentes, dans lequel au moins une partie de la buse (22) est à base d'un matériau non métallique, de sorte qu'une partie de l'interface entre la buse (22) et des parties à l'intérieur de la buse (22) qui est exposée à l'extrémité avant de la buse (22), lorsque le chalumeau soudeur (10) est assemblé, comprenne en partie le matériau non métallique.

10. Chalumeau soudeur (10) selon la revendication 9 lorsqu'elle dépend de la revendication 7 ou de la revendication 8, dans lequel une partie non métallique de la buse (22) se présente sous la forme d'un insert non métallique (28).

11. Chalumeau soudeur (10) selon la revendication 9 ou la revendication 10, dans lequel le matériau non métallique est une résine thermodurcissable.

12. Chalumeau soudeur (10) selon la revendication 11, dans lequel la résine thermodurcissable est une résine phénolique.

13. Chalumeau soudeur (10) selon l'une quelconque des revendications précédentes, dans lequel la buse (22) lorsqu'elle est adaptée au corps de chalumeau (12) vient en butée contre le corps de chalumeau (12) ou un composant fixé au corps de chalumeau (12) au niveau d'une interface, l'interface où elle est exposée à l'extrémité avant ouverte de la buse (22) formant une surface incurvée sensiblement continue.

14. Chalumeau soudeur (10) selon la revendication 13, dans lequel la surface incurvée est une surface concave qui fait face à l'extrémité ouverte du corps de chalumeau (12).
